# EUROPEAN PATENT APPLICATION

(11) **EP 4 545 606 A1**
(43) Date of publication of application: **30.04.2025**
(21) Application number: 24207215.5
(22) Date of filing: 17.10.2024
(51) Int. Cl.: C09D 7/61, C08K 3/22, C08L 83/04, C09D 183/04

(54) **MODIFIED SILICONE RUBBER CHEMISTRY**

(30) Priority: 26.10.2023 IN 202311072886
(71) Applicant: Eaton Intelligent Power Limited, Dublin 4 (IE)
(72) Inventor: PATIL, Sandip P., Dublin, D04 Y0C2 (IE)
(74) Representative: Schwan Schorer & Partner mbB

(57) **Abstract**

Disclosed herein are compositions for and methods of forming a modified silicone rubber that includes titanium dioxide. The disclosed composition creates a hydrophobic surface that prevents or minimizes ice formation on the external surface of apparatuses utilized in low temperature services. The disclosed composition is suitable for installation in cryogenic or refrigerant service, while also maintaining performance in high-temperature applications.

## Description

### CROSS-REFERENCE TO RELATED APPLICATIONS

This application claims the benefit of Indian Provisional Patent Application No. 202311072886, filed October 26, 2023, which is incorporated by reference herein in its entirety.

### BACKGROUND OF THE INVENTION

Hoses, sleeves, pipes, tubing, fittings, and other pieces of equipment utilized in cryogenic or refrigerant application may experience ice formation on their outer surface, due to the cold temperatures of the associated process causing moisture in the external air to condense and freeze. This buildup of ice causes several problems, including requiring operators to wear specialized personal protective equipment when handling an icy apparatus; requiring the installation of specialized safety features; causing polymer composites to crack or otherwise lose strength/integrity; and/or reducing the toughness of materials such as metals. Current silicone rubber compositions (for example, as may be formed into a protective sleeve) perform well at high temperatures but are not suitable for low temperature applications. A composition of a silicone rubber suitable for refrigerant or cryogenic service, from which apparatuses (for example, hoses), sleeves, or protective layers could be made is desired.

### SUMMARY OF THE INVENTION

Disclosed herein are compositions for a modified silicone rubber that includes titanium dioxide. The disclosed composition creates a hydrophobic surface that prevents or minimizes ice formation on the external surface of apparatuses utilized in low temperature services. The disclosed composition is suitable for installation in cryogenic or refrigerant service, while also maintaining performance in high-temperature applications. Also disclosed herein are methods of forming the same.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

### BRIEF DESCRIPTION OF THE DRAWINGS

Non-limiting and non-exhaustive examples are described with reference to the following Figures.
Figure 1A depicts a cross-sectional view of an example silicone layer on a pipe or tube, with ice on its outer surface.
Figure 1B depicts a cross-sectional view of an example silicone layer on a fitting, with ice on its outer surface, according to an example.
Figure 2A depicts an example water droplet on a hydrophilic surface.
Figure 2B depicts an example water droplet on a hydrophobic surface.
Figure 3A depicts an example polydimethylsiloxane molecular arrangement.
Figure 3B depicts an example polydimethylsiloxane and titanium dioxide molecular arrangement.
Figure 4 depicts an example method for forming a modified polydimethylsiloxane and titanium dioxide composition for prevention of ice formation on a substrate.

### DETAILED DESCRIPTION

In the following detailed description, references are made to the accompanying drawings that form a part hereof, and in which are shown by way of illustrations specific embodiments or examples. These aspects may be combined, other aspects may be utilized, and structural changes may be made without departing from the present disclosure. Examples may be practiced as methods, systems, or devices. It should be understood that this invention is not limited to the particular methodology, protocols, and reagents, etc., described herein and as such may vary. The terminology used herein is for the purpose of describing particular embodiments only. The following detailed description is therefore not to be taken in a limiting sense, and the scope of the present disclosure is defined by the appended claims and their equivalents.

Unless defined otherwise, all technical and scientific terms used herein have the same meaning as those commonly understood to one of ordinary skill in the art to which this invention pertains.

For the purposes of this application the following terms shall have the following meanings:

As used herein and in the claims, the singular forms "a," "an", and "the" include the plural reference unless the context clearly indicates otherwise.

Other than in the operating examples, or where otherwise indicated, all numbers expressing quantities of ingredients or reaction conditions used herein should be understood as modified in all instances by the term "about." The term "about" when used herein in connection with numerical values means ± 20% and with percentages means ±1%.

As used herein, the term "comprising" refers to a composition, compound, formulation, or method that is inclusive and does not exclude additional elements or method steps.

As used herein, the term "consisting of" refers to a compound, composition, formulation, or method that excludes the presence of any additional component or method steps.

As used herein, the term "consisting essentially of" refers to a composition, compound, formulation, or method that is inclusive of additional elements or method steps that do not materially affect the characteristic(s) of the composition, compound, formulation or method.

There are many circumstances wherein equipment and/or apparatuses may be exposed to low temperatures. Examples include, but are not limited to, cryogenic processes, refrigerant processes, processes involving the Joule-Thomson effect, processes creating or involving liquid gasses (for example, hydrogen, helium, oxygen, ammonia, chlorine, nitrogen, hydrocarbons, and others), or others. Herein, "low temperature" is defined to mean refrigerant, cryogenic, or other processes wherein an outer surface is cold enough to cause condensation and freezing of water vapor on the surface. Such processes may be present in industrial, aerospace, military, laboratory, medical, transportation, energy generation, or other environments. When a material is at a cold temperature (for example, PDMS in a cryogenic or refrigerant service), water vapor in the surrounding, external air may condense onto the external surface of the material. The volume and shape of water droplets that form on the surface is related to the surface energy of the material. As described in more detail below, a more hydrophilic surface with have a higher surface energy. If the surface of the material is cold enough, the condensed water droplets will freeze, forming ice on the surface of the material.

In some examples, low temperature applications may include processes at temperatures of about -100°F. In some examples, low temperature applications may include processes at temperatures below about 45°F. In some examples, low temperature applications may include processes at temperatures below about 32°F. In some examples, low temperature applications may include processes at temperatures below about 10°F. In some examples, low temperature applications may include processes at temperatures below about 0°F. In some examples, low temperature applications may include processes at temperatures below about -10°F. In some examples, low temperature applications may include processes at temperatures below about - 20°F. In some examples, low temperature applications may include processes at temperatures below about -40°F. In some examples, low temperature applications may include processes at temperatures below about -100°F. In some examples, low temperature applications may include processes at temperatures below about -150°F. In some examples low temperature applications may include processes of temperatures between about -450°F and between about 45°F. In some examples low temperature applications may include processes of temperatures between about - 450°F and between about 0°F. In some examples low temperature applications may include processes of temperatures between about 0°F and between about 45°F. In some examples low temperature applications may include processes of temperatures between about -100°F and between about 32°F. In some examples low temperature applications may include processes of temperatures between about -100°F and between about 0°F.

In some examples, cryogenic applications may include processes at temperatures of about -450°F. In some examples, cryogenic applications may include processes at temperatures below about -450°F. In some examples, cryogenic applications may include processes at temperatures below about -500°F. In some examples, cryogenic applications may include processes at temperatures below about -321°F. In some examples, cryogenic applications may include processes at temperatures below about -242°F. In some examples, cryogenic applications may include processes at temperatures below about -58°F. In some examples, cryogenic applications may include processes at temperatures below about -50°F. In some examples cryogenic applications may include processes of temperatures between about -450°F and between about -321°F. In some examples cryogenic applications may include processes of temperatures between about -450°F and between about -242°F. In some examples cryogenic applications may include processes of temperatures between about -450°F and between about - 58°F. In some examples cryogenic applications may include processes of temperatures between about -500°F and between about -400°F. In some examples cryogenic applications may include processes of temperatures between about -321 °F and between about -242°F. In some examples cryogenic applications may include processes of temperatures between about -321°F and between about -58°F. In some examples cryogenic applications may include processes of temperatures between about -242°F and between about -58°F.

In some examples, refrigerant applications may include processes at temperatures of about -250°F. In some examples, refrigerant applications may include processes at temperatures below about -250°F. In some examples, refrigerant applications may include processes at temperatures below about -300°F. In some examples, refrigerant applications may include processes at temperatures below about -200°F. In some examples, refrigerant applications may include processes at temperatures below about -150°F. In some examples, refrigerant applications may include processes at temperatures below about -100°F. In some examples, refrigerant applications may include processes at temperatures below about -50°F. In some examples, refrigerant applications may include processes at temperatures below about 0°F. In some examples, refrigerant applications may include processes at temperatures below about 32°F. In some examples refrigerant applications may include processes of temperatures between about -250°F and between about 32°F. In some examples refrigerant applications may include processes of temperatures between about -300°F and between about -200°F. In some examples refrigerant applications may include processes of temperatures between about -250°F and between about -100°F. In some examples refrigerant applications may include processes of temperatures between about -250°F and between about -50°F. In some examples refrigerant applications may include processes of temperatures between about -300°F and between about - 100°F.

In a particular example, an application of the disclosed systems and methods includes liquid hydrogen stored and utilized in a cryogenic system of an aircraft. The liquid hydrogen may be stored at an average temperature of about -423°F (at a maximum pressure of 700 bar). At such a high pressure, the integrity of the process fittings, pipes, hoses, equipment, and other apparatuses is paramount to maintain safety and prevent loss of containment.

Ice formation on surfaces is problematic for several reasons. Operators or other users who need to interact with the equipment/apparatuses subject to ice formation must wear specialized personal protective equipment when handling an icy apparatus to protect themselves from the ice. To further enable safe handling of icy equipment/apparatuses, specialized safety features may be installed (for example, vacuum insulation or extended/insulated handles), increasing cost and complexity of the system without preventing the ice buildup itself. Additionally, the ice buildup can be detrimental to the equipment/apparatuses themselves, for example, causing polymer composites to crack or otherwise lose strength/integrity, and/or reducing the toughness of materials such as metals (for example, braided metal hoses). The performance and integrity of the equipment/apparatuses may be degraded by a combination of several mechanisms. A hydrophilic material may absorb water (and/or hold more water on its surface), causing cracks in the surface or exacerbating existing cracks. Ice formation on the surface may cause the material to become more susceptible to cracking, and ice formation in cracks can expand the cracks further.

Disclosed herein are compositions and related methods for a modified silicone rubber that includes titanium dioxide. Silicone rubber may be used for the formation of apparatuses such as hoses, as well as for the formation of protective coatings, layers, and sleeves. An example silicone rubber is polydimethylsiloxane (PDMS), although others may be contemplated. PDMS is a polymer, with chains that contain a hydrophilic, highly polar, silicon-based backbone. This silicon-based backbone is surrounded by nonpolar methyl groups. An example PDMS polymer formula is shown below.

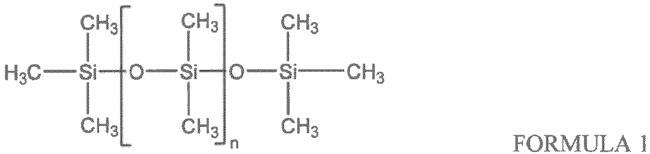

In FORMULA 1 above, n indicates a number of dimethylsiloxane functional groups present in the particular polymer molecule. As the number n varies, so does the molecular weight of the polymer. In some examples, PDMS as utilized in disclosed compositions includes a range of molecular weights (a range of polymer lengths/n's). In some examples, average molecular weights of PDMS may be between about 2000 Da to about 130,000 Da. In some examples, average molecular weights of PDMS may be between about 1500 Da to about 180,000 Da. In some examples, average molecular weights of PDMS may be between about 2500 Da to about 100,000 Da. In some examples, average molecular weights of PDMS may be between about 3000 Da to about 90,000 Da. In some examples, average molecular weights of PDMS may be between about 4000 Da to about 75,000 Da. In some examples, average molecular weights of PDMS may be between about 5000 Da to about 50,000 Da. In some examples, average molecular weights of PDMS may be between about 7500 Da to about 25,000 Da. In some examples, average molecular weights of PDMS may be between about 10,000 Da to about 20,000 Da. In some examples, average molecular weights of PDMS may be between about 130,000 Da to about 80,000 Da. In some examples, average molecular weights of PDMS may be between about 80,000 Da to about 2,000 Da. In some examples, average molecular weights of PDMS may be less than about 180,000 Da. In some examples, average molecular weights of PDMS may be less than about 175,000 Da. In some examples, average molecular weights of PDMS may be less than about 150,000 Da. In some examples, average molecular weights of PDMS may be less than about 125,000 Da. In some examples, average molecular weights of PDMS may be less than about 100,000 Da. In some examples, average molecular weights of PDMS may be less than about 75,000 Da. In some examples, average molecular weights of PDMS may be less than about 50,000 Da. In some examples, average molecular weights of PDMS may be less than about 25,000 Da. In some examples, average molecular weights of PDMS may be less than about 10,000 Da. In some examples, average molecular weights of PDMS may be less than about 7,500 Da. In some examples, average molecular weights of PDMS may be less than about 5,000 Da. In some examples, average molecular weights of PDMS may be less than about 4,000 Da. In some examples, average molecular weights of PDMS may be less than about 3,000 Da. In some examples, average molecular weights of PDMS may be less than about 2,000 Da. In some examples, average molecular weights of PDMS may be less than about 1,500 Da. In some examples, average molecular weights of PDMS may be less than about 1,000 Da. In some examples, average molecular weights of PDMS may be greater than about 180,000 Da. In some examples, average molecular weights of PDMS may be greater than about 175,000 Da. In some examples, average molecular weights of PDMS may be greater than about 150,000 Da. In some examples, average molecular weights of PDMS may be greater than about 125,000 Da. In some examples, average molecular weights of PDMS may be greater than about 100,000 Da. In some examples, average molecular weights of PDMS may be greater than about 75,000 Da. In some examples, average molecular weights of PDMS may be greater than about 50,000 Da. In some examples, average molecular weights of PDMS may be greater than about 25,000 Da. In some examples, average molecular weights of PDMS may be greater than about 10,000 Da. In some examples, average molecular weights of PDMS may be greater than about 7,500 Da. In some examples, average molecular weights of PDMS may be greater than about 5,000 Da. In some examples, average molecular weights of PDMS may be greater than about 4,000 Da. In some examples, average molecular weights of PDMS may be greater than about 3,000 Da. In some examples, average molecular weights of PDMS may be greater than about 2,000 Da. In some examples, average molecular weights of PDMS may be greater than about 1,500 Da. In some examples, average molecular weights of PDMS may be greater than about 1,000 Da.

Once cured, bulk PDMS material may initially exhibit hydrophobic properties. However, material aging (especially at subzero temperatures such as those experienced in cryogenic or refrigerant service) may results in the loss of methyl groups, therefore making the PDMS material more hydrophilic. Additionally, unaltered, cured PDMS may swell and/or crack when exposed so subzero temperatures (for example, at around temperatures of -65°F).

The disclosed composition includes titanium dioxide (TiO2) particles or nanoparticles to the PDMS formula. As discussed further below, this extends the surface hydrophobicity of the PDMS and creates a hydrophobic surface that prevents or minimizes ice formation on the external surface. In some examples, other silicone/rubber materials may be included with and/or substituted for PDMS.

The disclosed composition is also suitable for installation in cryogenic or refrigerant service, while also maintaining performance in high-temperature applications. PDMS is often utilized to form protective sleeves for equipment/apparatuses that are in high-temperature services or in areas where fire prevention/protection is desired (for example, where they may be exposed of temperatures up to 2,000°F). However, when used in low temperature applications (for example, cryogenic or refrigerant applications), PDMS may lose strength/integrity and become prone to cracking. The inclusion of the TiO2, in addition to reducing or preventing ice formation, has an additional, surprising benefit of maintaining performance (e.g. integrity and strength, such as resistance to cracking) in low temperature applications.

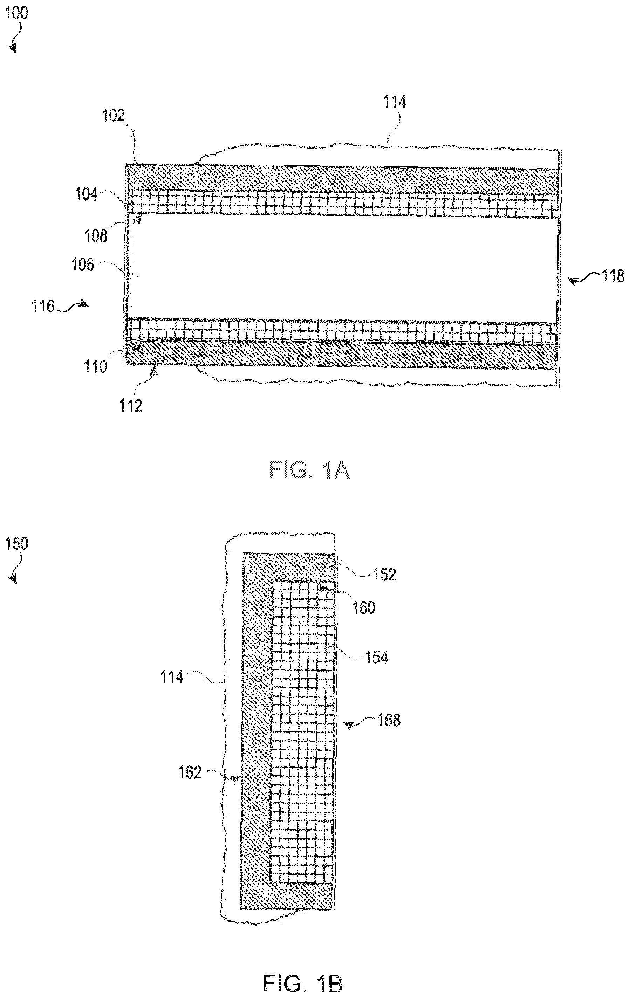

In accordance with principles of this disclosure, FIG. 1A depicts a cross-sectional view of an example silicone layer 102 on a pipe or tube 104, with ice 114 formed on at least a portion of its outer surface 112. In the example, pipe 104 may represent tubing, piping, braided/woven hose, process equipment, or another suitable apparatus. Pipe 104 may comprise a polymer, composite, metal, other material, or combinations thereof. In the example shown, pipe 104 has an inner surface 108 that defines an opening 106, and silicone layer 102 surrounds an external surface 110 of pipe 104. In some examples, silicone layer 102 exists without pipe 104, and itself forms a tube, pipe, hose, sheet, or other shape.

In the example, silicone layer 102 does not comprise TiO2, and therefore is subject to the formation of ice 114 on its outer surface 112. In an example, the ice 114 formation is thicker at a second end 118 of pipe 104 (for example, where second end 118 is closer to a low temperature source) than at a first and 116 of pipe 104.

FIG. 1B depicts a cross-sectional view of an example silicone layer 152 on a fitting or other piece of equipment or substrate 154, with ice 114 formed on its outer surface 162, according to an example. Fitting 154 may comprise a polymer, composite, metal, other material, or combinations thereof. In some examples, silicone layer 152 exists without fitting 154, and itself forms a fitting, sheet, or other shape. In the example, silicone layer 152 does not comprise TiO2, and therefore is subject to the formation of ice 114 on its outer surface 162.

Regarding FIGS. 1A and IB, silicone layers 102 and 152 may be extruded directly onto pipe 104 and 154, respectively. In another example, silicone layers 102 and 152 may be extruded directly onto pipe 104 and 154 but may comprise TiO2 as disclosed herein, and therefore would not be subject to the formation of ice 114 on their outer surfaces 112, 162. Once extruded onto a substrate material (for example, pipe, hose, tube, fitting, equipment, or other substrate), the PDMS and TiO2 composition may be cured. In some examples, curing may be done at room temperature, at a temperature higher than room temperature in an oven, by exposure to UV light, and/or by another curing method.

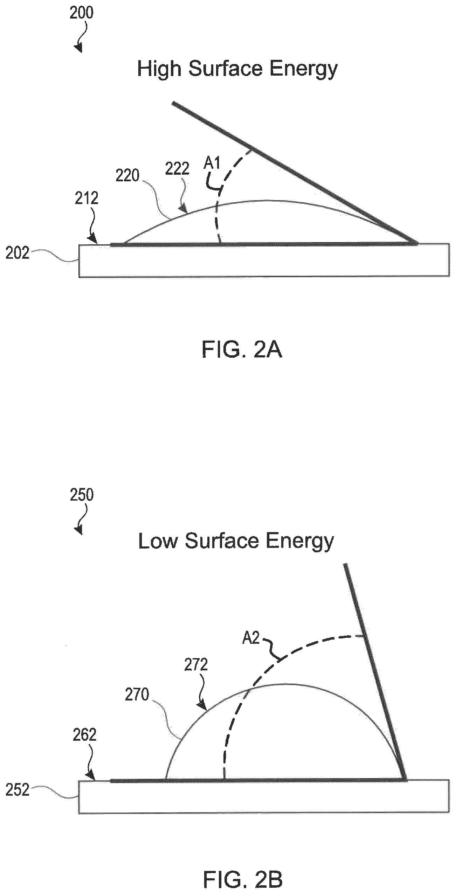

FIG. 2A depicts an example water droplet 220 on a hydrophilic surface 212 of a material 202. In an example, material 202 may be a silicone rubber, for example, PDMS (without comprising TiO2). Water droplet 220 sits on a surface 212 of material 202, and surface 212 is hydrophilic. Contact angle A1 is defined by the angle between the outer surface 222 of the water droplet 220 and the material surface 212. Hydrophilic material surface 212 has a high surface energy, meaning that contact angle A1 is relatively low. For example, contact angle A1 may be about 30°. In an example, contact angle may be less than about 50°. This causes water droplet 220 to have a flatter shape and contact a greater surface area of material surface 212. Therefore, any ice (for example, ice 114 as shown in FIGS. 1A, 1B), may cover a larger surface area of surface 212.

FIG. 2B depicts an example water droplet 270 on a hydrophobic surface 262 of a material 252. In an example, material 252 may be a silicone rubber, for example, PDMS that comprises TiO2. Water droplet 270 sits on a surface 262 of material 252, and surface 262 is hydrophobic. Contact angle A2 is defined by the angle between the outer surface 272 of the water droplet 270 and the material surface 262. Hydrophobic material surface 262 has a low surface energy, meaning that contact angle A2 is relatively high. For example, contact angle A2 may be about 75°. In an example, contact angle may be greater than about 50°. This causes water droplet 270 to have a more rounded/domed shape and contact a smaller surface area of material surface 262. The hydrophobic nature of surface 262 may lead to water droplets 270 rolling/beading off of surface 262 (and not absorbing into surface 262), and therefore, there will be no droplets 270 to form ice on surface 262. Additionally, because of the smaller surface area of droplets 270 that do not bead off of the surface 262, any residual ice (for example, ice 114 as shown in FIGS. 1A, 1B), that does form may cover a smaller surface area of surface 262.

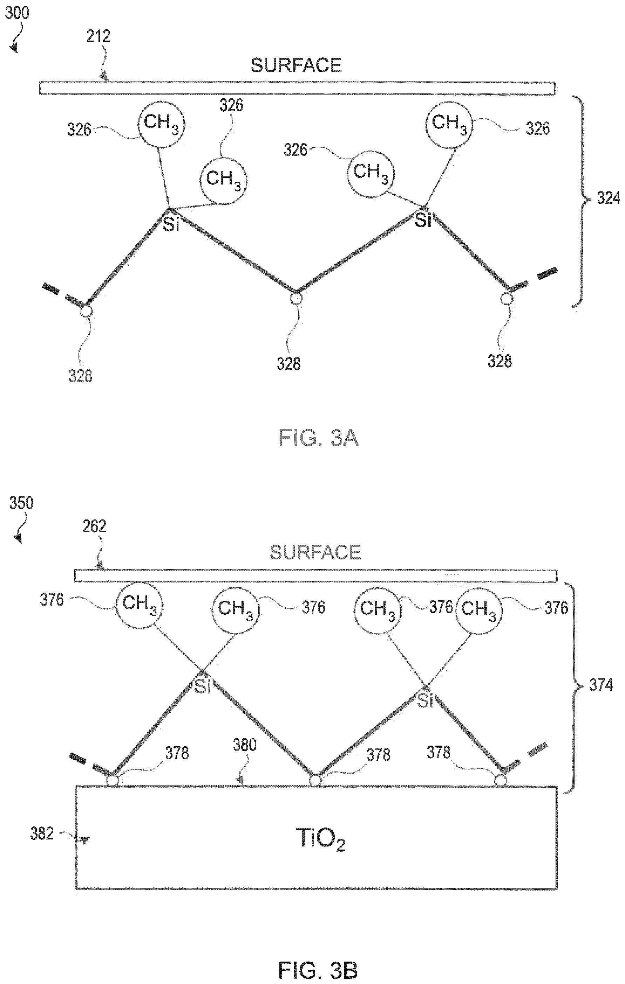

FIG. 3A depicts an example polydimethylsiloxane molecular arrangement 300. Arrangement 300 shows an unmodified (i.e. not comprising TiO2) PDMS 324 molecular configuration, in which the methyl groups 326 are oriented nearer the (more hydrophilic) surface 212 of the material than the oxygen atoms 328, but the methyl groups 326 are arranged at irregular distances from surface 212.

FIG. 3B depicts an example polydimethylsiloxane and titanium dioxide molecular arrangement 350. Arrangement 350 shows a modified PDMS 374 molecular configuration, in which the oxygen atoms 378 are arranged at an outer surface 380 of a TiO2 382 nanoparticle (or particle, in some examples). This arrangement of the oxygen atoms 378 leads to an arrangement and position of the PDMS 374 molecule(s) in which the methyl groups 376 are more consistently oriented at the surface 262. This close, consistent orientation of the methyl groups 376 at the surface 262 provides surface 262 with hydrophobic qualities.

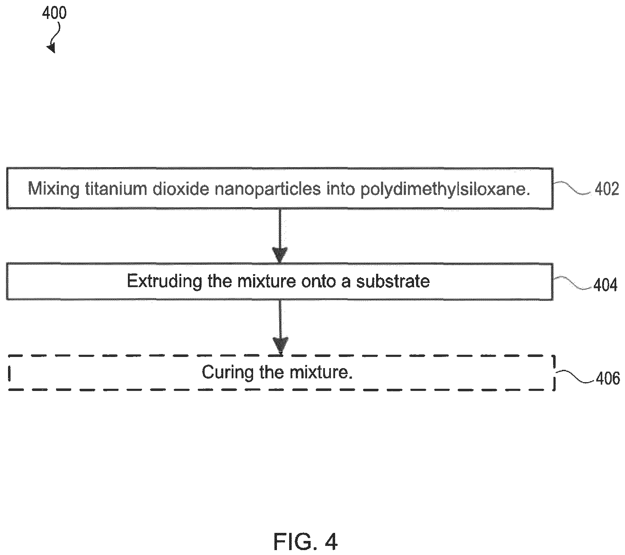

Figure 4 depicts an example method 400 for forming a modified polydimethylsiloxane and titanium dioxide composition, for preventing ice formation on a substrate. At operation 402, TiO2 nanoparticles are mixed into PDMS. In other examples, the TiO2 may be in the form of particles (larger than nanoparticles) or granules.

At operation 404, the mixture is extruded onto a substrate. The substrate may be a hose, fitting, piece of equipment, or other substrate as disclosed herein. The substrate may comprise metal, a polymer, a composite, or other material or combination of materials.

At operation 406, the mixture is cured.

Although specific aspects were described herein, the scope of the technology is not limited to those specific aspects. One skilled in the art will recognize other aspects or improvements that are within the scope of the present technology. Therefore, the specific structure, acts, or operations are disclosed only as illustrative aspects. The scope of the technology is defined by the following claims and any equivalents therein. Therefore, the specific structure, acts, or operations are disclosed only as illustrative aspects. The scope of the technology is defined by the following claims and any equivalents therein. Examples of the disclosure may be described according to the following aspects.

Aspect 1. An apparatus, comprising: a substrate; a protective layer comprising: polydimethylsiloxane; and titanium dioxide.

Aspect 2. The apparatus of aspect 1, wherein the protective layer is extruded onto an outer surface of the substrate.

Aspect 3. The apparatus of any of aspects 1-2, wherein the titanium dioxide comprises titanium dioxide nanoparticles.

Aspect 4. The apparatus of any of aspects 1-3, wherein the substrate comprises a hose.

Aspect 5. The apparatus of any of aspects 1-3, wherein the substrate comprises a fitting.

Aspect 6. A method of preventing ice formation on a substrate, comprising: mixing titanium dioxide nanoparticles into PDMS; extruding the mixture onto the substrate; and curing the mixture.

Aspect 7. The method of aspect 6, wherein the substrate comprises a hose.

Aspect 8. The method of aspect 6, wherein the substrate comprises a fitting.

Aspect 9. A composition for a protective layer for a substrate, comprising: PDMS; and titanium dioxide, wherein the composition is extruded onto a substrate.

Aspect 10. The composition of aspect 9, wherein the substrate comprises a hose.

Aspect 11. The composition of aspect 9, wherein the substrate comprises a fitting.

For the purposes of this application, directional terms such as "upper," "lower," "upward," and "downward" are intended to be descriptive with reference to the disclosure above and, where applicable, in relation to the orientation shown in the Figures for clarity. The examples as practiced and included in the scope of the claims may include examples where the systems and devices are in a different orientation.

While particular uses of the technology have been illustrated and discussed above, the disclosed technology can be used with a variety of environments in accordance with many examples of the technology. The above discussion is not meant to suggest that the disclosed technology is only suitable for implementation within the environments shown and described above. As should be appreciated, the various aspects described with respect to the figures herein are not intended to limit the technology to the particular aspects described. Accordingly, additional configurations can be used to practice the technology herein and/or some aspects described can be excluded without departing from the methods and systems disclosed herein.

This disclosure described some aspects of the present technology with reference to the accompanying drawings, in which only some of the possible aspects were shown. Other aspects can, however, be embodied in many different forms and should not be construed as limited to the aspects set forth herein. Rather, these aspects were provided so that this disclosure was thorough and complete and fully conveyed the scope of the possible aspects to those skilled in the art.

Similarly, where operations of a process are disclosed, those operations are described for purposes of illustrating the present technology and are not intended to limit the disclosure to a particular sequence of operations. For example, the operations can be performed in differing order, two or more operations can be performed concurrently, additional operations can be performed, and disclosed operations can be excluded without departing from the present disclosure. Further, each operation can be accomplished via one or more sub-operations. The disclosed processes can be repeated.

Although specific aspects were described herein, the scope of the technology is not limited to those specific aspects. One skilled in the art will recognize other aspects or improvements that are within the scope of the present technology. Therefore, the specific structure, acts, or operations are disclosed only as illustrative aspects. The scope of the technology is defined by the following claims and any equivalents therein.

## Claims

1. An apparatus, comprising:
a substrate;
a protective layer comprising:
polydimethylsiloxane; and
titanium dioxide.

2. The apparatus of claim 1, wherein the protective layer is extruded onto an outer surface of the substrate.

3. The apparatus of any of claims 1-2, wherein the titanium dioxide comprises titanium dioxide nanoparticles.

4. The apparatus of any of claims 1-3, wherein the substrate comprises a hose.

5. The apparatus of any of claims 1-3, wherein the substrate comprises a fitting.

6. A method of preventing ice formation on a substrate, comprising:
mixing titanium dioxide nanoparticles into PDMS;
extruding the mixture onto the substrate; and
curing the mixture.

7. The method of claim 6, wherein the substrate comprises a hose.

8. The method of claim 6, wherein the substrate comprises a fitting.

9. A composition for a protective layer for a substrate, comprising:
PDMS; and
titanium dioxide, wherein the composition is extruded onto a substrate.

10. The composition of claim 9, wherein the substrate comprises a hose.

11. The composition of claim 9, wherein the substrate comprises a fitting.
